(19) Europäisches Patentamt
European Patent Office
Office européen des brevets

(11) **EP 3 955 444 A1**

(12) **EUROPEAN PATENT APPLICATION**

(43) Date of publication:
**16.02.2022   Bulletin 2022/07**

(21) Application number: **20191177.3**

(22) Date of filing: **14.08.2020**

(51) International Patent Classification (IPC):
**H02M 1/38** (2007.01)      **H02M 1/42** (2007.01)
**H02M 3/158** (2006.01)      **H02M 1/00** (2006.01)

(52) Cooperative Patent Classification (CPC):
**H02M 1/0074; H02M 1/0077; H02M 3/158;**
H02M 1/0058; H02M 1/38; H02M 1/4225

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Infineon Technologies Austria AG
9500 Villach (AT)**

(72) Inventors:
• **KASPER, Matthias Joachim
  9500 Villach (AT)**
• **PELUSO, Luca
  9500 Villach (AT)**
• **DEBOY, Gerald
  9061 Klagenfurt (AT)**

(74) Representative: **Westphal, Mussgnug & Partner,
Patentanwälte mbB
Werinherstraße 79
81541 München (DE)**

(54) **STACKED BOOST POWER CONVERTER**

(57)      A power converter and a method are disclosed. The power converter includes: an input (a, b) configured to receive an input voltage (Vin); a first converter stage (1) coupled between the input (a, b) and a first output (x, z); a second converter stage (2) coupled between the input (a, b) and a second output (y, z); and a capacitive circuit (4). The first output (x, z) includes a first output node (x) and a mid-point (z) and the second output (z, y) includes the mid-point (z) and a second output node (y). Furthermore, the capacitive circuit (4) is coupled to the input (a, b) and includes a tap (43) connected to the mid-point.

FIG 1

**Description**

This disclosure relates in general to a power converter. More specifically, the disclosure relates to a stacked boost converter.

A stacked boost converter includes two boost converter stages, a first boost converter stage coupled between an input and a first output, and a second boost converter stage coupled between the input and a second output. The first output includes a first output node and an intermediate node and the second output includes the intermediate node and a second output node, so that the first boost converter stage and the second boost converter stage are stacked. An overall output voltage is given by an output voltage of the first boost converter stage plus an output voltage of the second boost converter stage.

A voltage rating (voltage blocking capability) of electronic devices in the boost converter stages needs to be adapted to the output voltage of the respective converter stage. If, for example, the output voltage of each converter stage is about 50% of the overall output voltage the voltage rating of the electronic devices in the boost converter stages is only about 50% of the voltage rating of electronic devices in a boost converter with only one converter stage (single stage boost converter) that generates an output voltage with the same voltage level as the overall output voltage in the boost converter stage. Although the stacked boost converter requires twice the number of electronic devices than the single stage boost converter the stacked boost converter may potentially be cheaper and have lower conduction losses (the conduction losses in MOSFET, which is one example of an electronic device that may be employed in a boost converter, are exponentially dependent on the voltage rating).

In a stacked boost converter, however, operating modes may occur in which the electrical potential of the intermediate node jumps with respect to a fixed reference potential (e.g., ground) between two or more levels. That is, the overall output voltage remains essentially constant but the electrical potential of the output voltage referenced to the fixed reference potential may rapidly change This results in a high common mode noise at the output, which may require a transformer or a converter with an isolating topology to be connected between the output and a load.

There is a need for an improved stacked boost converter.

One example relates to a power converter. The power converter includes an input configured to receive an input voltage, a first converter stage coupled between the input and a first output, a second converter stage coupled between the input and a second output, and a capacitive circuit. The first output includes a first output node and a mid-point, and the second output includes the mid-point and a second output node. The capacitive circuit is coupled to the input and includes a tap connected to the mid-point.

A further example relates to method. The method includes receiving an input voltage at an input of a power converter and providing an output voltage between a first output node and a second output node of the power converter. The power converter includes a first converter stage coupled between the input and a first output having a first output node and a mid-point, a second converter stage coupled between the input and a second output having the mid-point and the second output node, and a capacitive circuit. The capacitive circuit is coupled to the input and includes a tap connected to the mid-point.

Examples are explained below with reference to the drawings. The drawings serve to illustrate certain principles, so that only aspects necessary for understanding these principles are illustrated. The drawings are not to scale. In the drawings the same reference characters denote like features.

Figure 1 shows a circuit diagram of a stacked boost converter according to one example;

Figure 2 shows a circuit diagram of a stacked boost converter according to another example;

Figure 3 illustrates signal waveforms of one example of an input voltage received by the stacked boost converter and of a mid-point voltage;

Figure 4 illustrates one example of connecting a load to the stacked boost converter;

Figure 5 illustrates another example of connecting a load to the stacked boost converter;

Figures 6A and 6B illustrate examples of a load in greater detail;

Figure 7 shows a block diagram of a controller that includes an outer control loop, an inner control loop and a PWM modulator;

Figures 8A and 8B show different examples of the outer control loop of the controller;

Figure 9 shows one example of the inner control loop of the controller;

Figure 10 shows another example of the inner control loop of the controller;

Figures 11 to 13 show signal diagrams of drive signals generated by the controller according to different examples;

Figures 14A to 14D illustrate different operating states of the stacked boost converter;

Figures 15 and 16 show signal diagrams that illustrate operation of the stacked boost converter in a first operating scenario;

Figures 17 and 18 show signal diagrams that illustrate operation of the stacked boost converter in another operating scenario;

Figure 19 shows a stacked boost converter of the type shown in Figure 1;

Figure 20 show signal diagrams that illustrate operation of the stacked boost converter according to Figure 19 in TCM; and

Figure 21 shows one example of a PWM modulator of the controller shown in Figure 19.

In the following detailed description, reference is made to the accompanying drawings. The drawings form a part of the description and for the purpose of illustration show examples of how the invention may be used and implemented. It is to be understood that the features of the various embodiments described herein may be combined with each other, unless specifically noted otherwise.

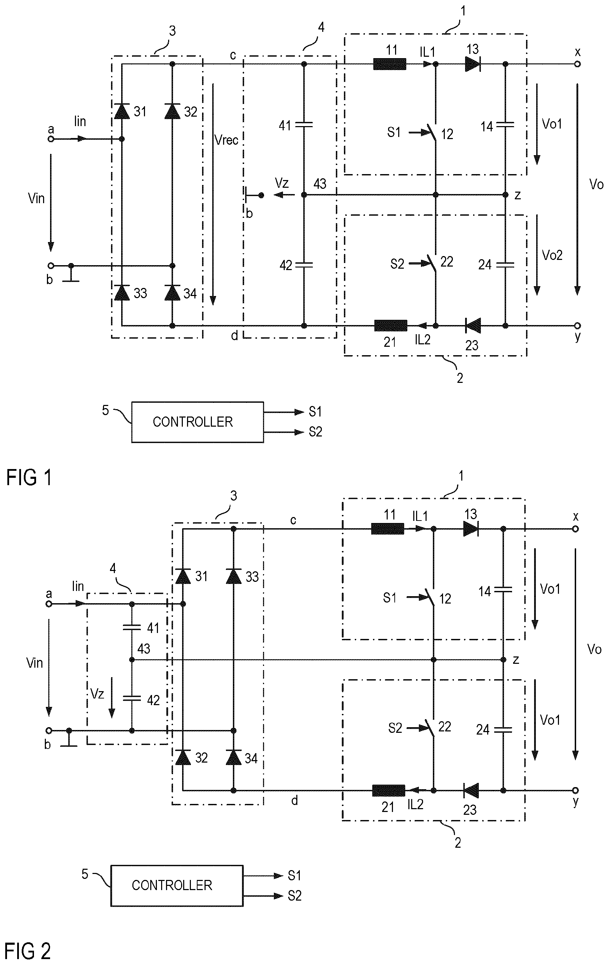

Figure 1 shows a circuit diagram of a stacked boost converter (which is briefly referred to as boost converter in the following) according to one example. This boost converter includes an input a, b that is configured to receive an input voltage Vin and an input current Iin. Further, the boost converter includes a first converter stage 1 and a second converter stage 2, wherein the first converter stage 1 is coupled between the input a, b and a first output x, z, and the second converter stage 2 is coupled between the input a, b and a second output z, y. The first output x, z includes a first output node x and an intermediate node, which is also referred to as mid-point z in the following. The second output z, y includes the mid-point z and a second output node y.

In the example shown in Figure 1, "the first converter stage 1 being coupled to the input a, b" includes that the first converter stage 1 is connected to a first intermediate node c, wherein the first intermediate node c is connected to the input a, b via an input rectifier 3. Furthermore, "the second converter stage 2 being coupled to the input a, b" includes that the second converter stage 2 is connected to a second intermediate node d, wherein the second intermediate node d is connected to the input a, b via the input rectifier 3.

In the example shown in Figure 1, the input rectifier 3 is a passive rectifier that includes four rectifier elements, a first rectifier element 31 connected between a first input node a and the first intermediate node c, a second rectifier element 32 connected between a second input node b and the first intermediate node c, a third rectifier element 33 connected between the first input node a and the second intermediate node d, and a fourth rectifier element 34 connected between the second input node b and the second intermediate node d. Implementing the input rectifier 3 with passive rectifier elements, such as diodes illustrated in Figure 1, is only one example. According to another example (not illustrated) the passive rectifier element 31-34 are replaced by active rectifier elements, such as MOSFETs (Metal Oxide Semiconductor Field-Effect Transistors).

The input rectifier 3 is configured to receive the input voltage Vin at the input a, b and provide a rectified input voltage Vrec between the intermediate nodes c, d. If, for example, the input voltage Vin is a sinusoidal voltage, the rectified voltage Vrec available between the intermediate nodes c, d is a rectified sinusoidal voltage.

Referring to Figure 1, each of the converter stages 1, 2 includes an inductor 11, 21, such as a choke, an electronic switch 12, 22, a rectifier element 13, 23, and an output capacitor 14, 24. The output capacitor 14 of the first converter stage 1 is connected between the first output node x and the mid-point z, and the output capacitor 24 of the second converter stage 2 is connected between the mid-point z and the second output node y. The inductor 11 and the electronic switch 12 of the first converter stage 1 are connected in series between the first intermediate node c and the mid-point z such that the inductor 11 is connected to the first intermediate node c and the electronic switch 12 is connected to the mid-point z. Equivalently, in the second converter stage 2, the inductor 21 and the electronic switch 22 are connected in series between the second intermediate node d and the mid-point z, wherein the inductor 21 is connected to the second intermediate node d and the electronic switch 22 is connected to the mid-point z. In the first converter stage 1, the rectifier element 13 is connected between a circuit node common to the inductor 11 and the electronic switch 12 and the first output node x. In the second converter stage 2, the rectifier element 23 is connected between a circuit node common to the inductor 21 and the electronic switch 22 and the second output node y.

In the example illustrated in Figure 1, the rectifier elements 13, 23 in the converter stages 1, 2 are drawn as pn-diodes. This, however, is only an example. Any kind of passive or active rectifier elements can be used. Another example of passive rectifier elements includes Schottky diodes. Active rectifier elements are synchronous rectifiers, for example. A synchronous rectifier may be implemented using a MOSFET.

In the following, the inductor 11 of the first converter stage 1 is also referred to as first inductor, the inductor 21 of the second converter stage 2 is also referred to as second inductor, the switch 12 of the first converter stage 1 is also referred to as first switch, and the switch 22 of the second converter stage 2 is also referred to as second switch.

According to one example, as illustrated in Figure 1, a polarity of the rectifier elements 13, 23 is such that a current can flow from the first intermediate node c via the inductor 11 and the rectifier element 13 of the first converter stage 1, the output, and the rectifier element 23 and the inductor 21 of the second converter stage 2 to the second intermediate node d. "A current flowing via the output" may include that the current flows via the output capacitors 14, 24 and/or a load (not illustrated in Figure 1) connected at least to the first and second output nodes x, y.

Referring to Figure 1, the boost converter further includes a capacitive circuit 4, which may also be referred to as capacitive voltage divider or capacitive filter. In the example shown in Figure 1, the capacitive circuit 4 is coupled to the input a, b and includes a tap 43 that is connected to the mid-point z. The capacitive circuit is configured to adjust the potential at the mid-point z and, therefore, helps to prevent rapid changes of the mid-point potential.

In the example shown in Figure 1, the capacitive circuit 4 includes a first capacitor 41 and a second capacitor 42 connected in series, wherein the tap 43 is a circuit node common to the first capacitor 41 and the second capacitor 42. In the example shown in Figure 1, the capacitive circuit 4 is coupled to the input a, b via the input rectifier 3. More specifically, in the example shown in Figure 1, the first capacitor 41 is connected between the first intermediate node c and the mid-point z, and the second capacitor 42 is connected between the second intermediate node d and the mid-point z. As explained above, each of the first and second intermediate nodes c, d is coupled to the input a, b via the input rectifier 3.

Coupling the capacitive circuit 4 to the input a, b by connecting the capacitive circuit 4 between the intermediate nodes c, d, however, is only an example. According to another example illustrated in Figure 2, the capacitive circuit 4 is directly connected between the input nodes a, b.

In each case, the capacitive circuit 4 adjusts an electrical potential at the mid-point z and, therefore, helps to avoid rapid changes (jumps) of the electrical potential at the mid-point z. Without the capacitive circuit, such voltage jumps may occur due to a switched-mode operation of the converter stages 1, 2. Examples of the switched-mode operation of the converter stages 1, 2 are explained in detail herein further below.

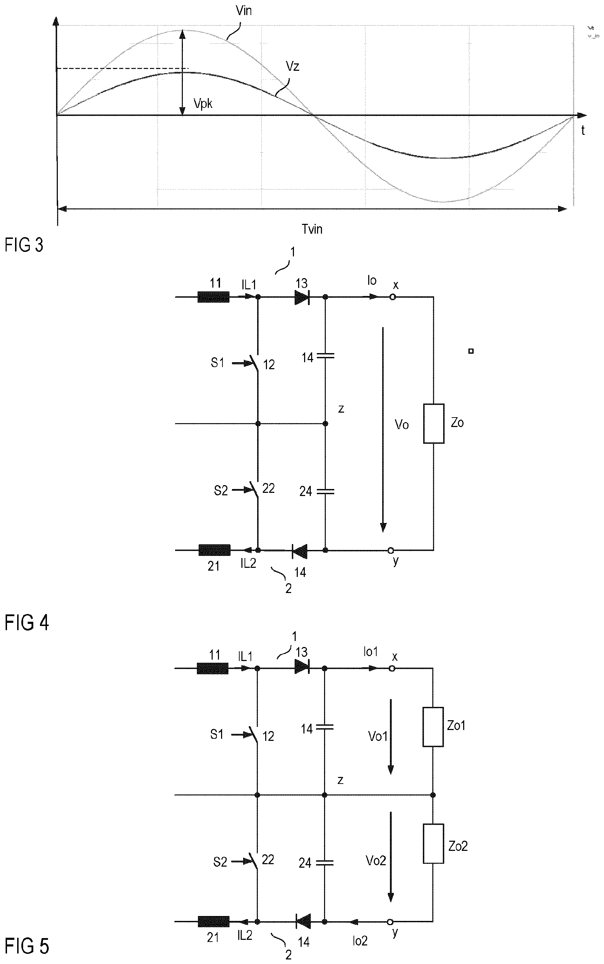

According to one example, the input voltage Vin is a sinusoidal voltage. Figure 3 shows a signal diagram of a sinusoidal input voltage Vin according to one example. In Figure 3, one period of the input voltage Vin is illustrated. A duration Tvin of this period is dependent on a frequency fvin of the input voltage Vin, wherein the duration Tvin is the reciprocal of the frequency Tvin=1/fvin. According to one example, the frequency fvin is 50 Hz or 60 Hz. According to one example, the input voltage Vin is the voltage of one phase of a three-phase grid voltage, wherein an RMS (root-mean-square) value of the input voltage Vin is 230 V and the amplitude (peak voltage) Vpk is about 325 V, for example. According to another example, the input voltage Vin is one of three delta voltage of a three-phase grid voltage, wherein the delta voltage is the voltage between two of the three phases and has an RMS value of about 400 V and an amplitude (peak voltage) Vpk of about 566 V.

In Figures 1, 2 and 3, Vz denotes a mid-point voltage, which is a voltage between the mid-point z and the second input node b. This mid-point voltage Vz represents the electrical potential at the mid-point z. This mid-point voltage Vz varies as the input voltage Vin varies, wherein a magnitude of the mid-point voltage Vz is dependent on the input voltage Vin and a capacitive circuit ratio of the capacitive circuit 4. According to one example, the first capacitor 41 and the second capacitor 42 of the capacitive circuit 4 essentially have the same capacitance. In this example, the magnitude of the mid-point voltage Vz is essentially 50% of the (instantaneous) magnitude of the input voltage Vin, so that

$$Vz \approx \frac{Vin}{2} \qquad\qquad (1).$$

According to one example, a capacitance of each of the first and second capacitors 41, 42 is significantly lower than a capacitance of each of the first and second output capacitors 14, 24. For example, a capacitance of each of the first and second capacitors 41, 42 is less than 1% or less than 0.1% of a capacitance of each of the first and second output capacitors 14, 24. According to one example, the capacitance of each of the first and second capacitors 41, 42 is selected from between 100 nanofarads (nF) and 1 microfarad (1μF).

As can be seen from Figure 3 and equation (1), the mid-point voltage Vz varies over one period of the input voltage Vin. However, as compared to rapid changes that may occur due to the switched-mode operation of the first and second converter stages 1, 2 in a boost converter without the capacitive circuit 4, changes in the midpoint voltage z occur very slow, and, therefore, do not cause a significant common mode noise at the output x, y. This is explained in detail herein further below.

Referring to Figures 1 and 2, the boost converter further includes a controller 5. The controller 5 is configured to control operation of the boost converter by controlling operation of the electronic switches 12, 22 in the converter stages 1, 2. Each of these electronic switches 12, 22 receives a respective drive signal S1, S2, wherein these drive signals S1, S2 are generated by the controller 5. Any type of electronic switch may be used to implement the electronic switches 12, 22 in the converter stages 1, 2. Examples of electronic switches that are suitable to be used in the converter stages 1, 2 include, but are not restricted to, MOSFETs, IGBTs (Insulated Gate Bipolar Transistors), BJTs (Bipolar Junction Transistors), HEMTs (High Electron Mobility Transistors) such as GaN-HEMTs, or the like.

Referring to Figures 1 and 2, the first converter stage 1 provides a first output voltage Vo1 between the first output node x and the mid-point z and the second converter stage 2 provides a second output voltage Vo2 between the mid-point z and the second output node y. An overall output voltage Vo between the first output node x and the second output node y is given by the first output voltage Vo1 plus the second output voltage Vo2,

$$Vo = Vo1 + Vo2 \qquad\qquad (2).$$

The boost converter is suitable to supply different kinds of loads. According to one example illustrated in Figure 4, a load Zo is connected between the first output node x and the second output node y and receives the overall output voltage Vo and an output current Io from the boost converter. The load Zo is not connected to the mid-point z, which is only connected to the tap 43 of the capacitor voltage divider 4 (not illustrated in Figure 4).

According to another example illustrated in Figure 5, a first load Zo1 is connected to the first output, that is, between the first output node x and the mid-point z, and a second load Zo2 is connected to the second output, that is, between the mid-point z and the second output node y. The first load Zo1 receives the first output voltage Vo1 and a first output current Io1, and the second load Zo2 receives the second output voltage Vo2 and a second output current Io2. A power consumption of the first load Zo1 and the second load Zo2 can be essentially the same or can be different from each other. Furthermore, according to one example, the first output voltage Vo1 and the second output voltage Vo2 are regulated independently, wherein these output voltages Vo1, Vo2 may have essentially the same voltage level or may have different voltage levels. This is explained in detail herein further below.

Each load Zo, Zo1, Zo2 illustrated in Figures 4 and 5 can be any kinds of electrical load or load circuit. According to one example, the load Zo, Zo1, Zo2 may include an additional voltage converter that receives the respective output voltage Vo, Vo1, Vo2 and is configured to generate a different output voltage or is configured to generate a regulated output current based on the received respective output voltage Vo1, Vo2, Vo.

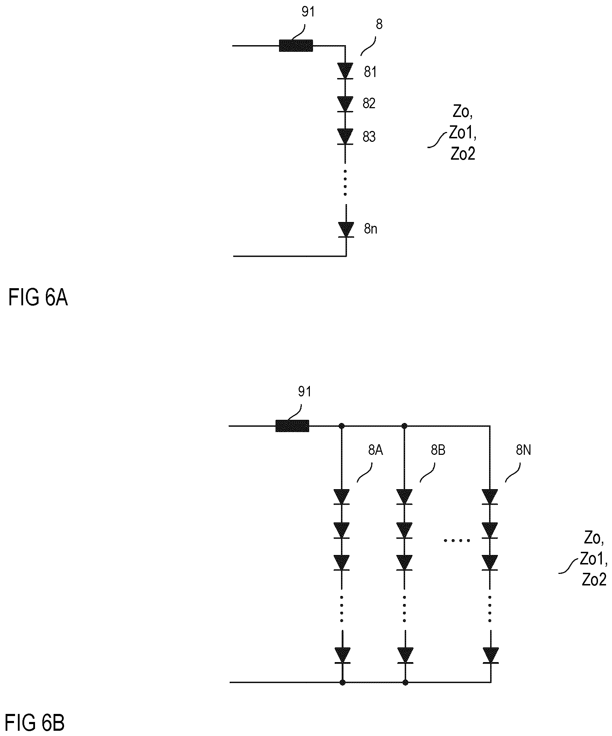

According to another example, the loads Zo, Zo1, Zo2 are devoid of a further voltage converter. One example of a load that may directly be connected to the boost converter is illustrated in Figure 6A. In this example, the load includes an LED string 8 with a plurality of LEDs 81-8n connected in series. Optionally, a filter inductor 91 is connected in series with the LED string. According to one example, the LEDs 81-8n of the LED string are horticultural LEDs that may be used in greenhouses. It should be noted that the load illustrated in Figure 6A represents an arbitrary one of the loads Zo, Zo1, Zo2 illustrated in Figures 4 and 5.

Although the load shown in Figure 6A includes only one LED string, this is only an example. According to another example illustrated in Figure 6B, the load includes a plurality of LED strings 8A-8N, each including a plurality of LEDs connected in series. According to an example, one optional filter inductor is connected in series with the parallel circuit that includes the plurality of LED strings 8A-8N. According to another example, not illustrated, each of the LED strings 8A-8N includes an optional filter inductor.

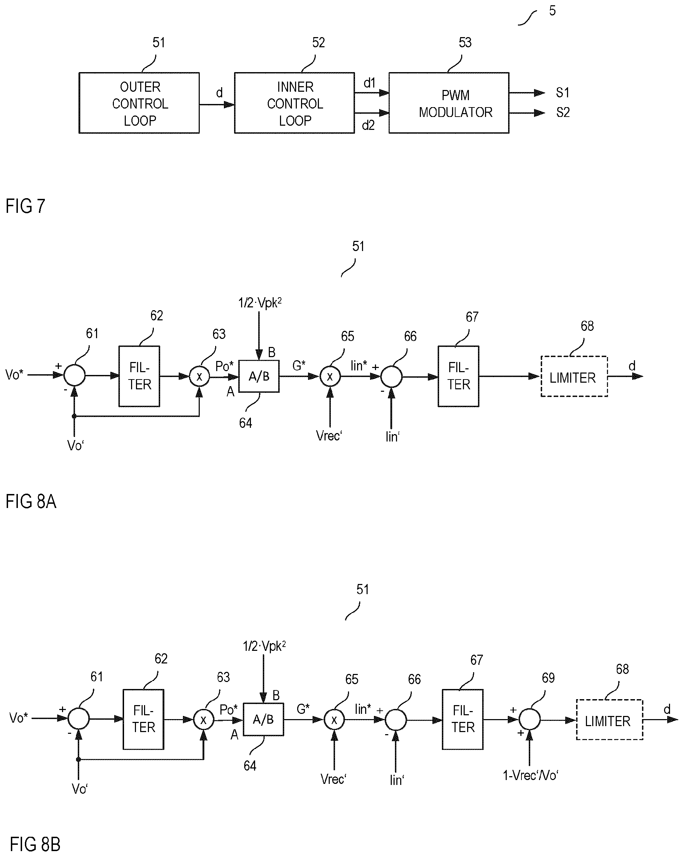

Figure 7 illustrates a block diagram of the controller 5 according to one example. Referring to Figure 7, the controller includes an outer control loop 51, an inner control loop 52, and a PWM modulator 53. The outer control loop 51 regulates the overall output voltage Vo and, for this purpose, controls an overall input power received by the boost converter. Furthermore, the outer control loop 51 is configured to regulate a waveform of the input current Iin in order to achieve a PFC (Power Factor Correction, Power Factor Control). According to one example the waveform of the (average) input current Iin is regulated such that it essentially equals the waveform of the input voltage Vin. In this case, if the input voltage Vin is a sinusoidal voltage, for example, the input power varies in accordance with a sine-squared signal.

The outer control loop 51 outputs an overall duty cycle signal d that represents an overall duty cycle. This overall duty cycle can be considered as an average duty cycle of the first and second switch 12, 22.

The inner control loop 52 receives the overall duty cycle signal d and outputs a first duty cycle signal d1 and a second duty cycle signal d2 based on the overall duty cycle signal d. The first duty cycle d1 defines a duty cycle of a pulse width modulated (PWM) operation of the first switch 12, and the second duty cycle d2 defines a duty cycle of a PWM operation of the second switch 22. In the following, d denotes both the duty signal output by the outer control loop and the duty cycle represented by this signal. Equivalently, d1 denotes both the first duty signal and the first duty cycle represented by this signal, and d2 denotes both the second duty signal and the second duty cycle represented by this signal

Referring to Figure 7, a PWM modulator 53 receives the first and second duty cycle signals d1, d2 and generates the first drive signal S1 received by the first electronic switch 12 and the second drive signal S2 received by the second electronic switch 22 such that the first drive signal S1 has the first duty cycle d1 and the second drive signal S2 has the second duty cycle d2.

Figure 8A shows a block diagram of the outer control loop 51 according to one example. It should be noted that this block diagram illustrates functional blocks of the outer control loop 51 rather than a specific implementation. These functional blocks can be implemented in various ways. According to one example, these functional blocks are implemented using dedicated circuitry. According to another example, the outer control loop is implemented using hardware and software. For example, the outer control loop 51 includes a microcontroller and software executed by the microcontroller.

Referring to Figure 8A, the outer control loop 51 receives an output voltage reference Vo* which defines a setpoint of the output voltage Vo and a measured output voltage Vo'. The measured output voltage Vo' is a signal that represents the output voltage Vo. The measured output voltage Vo' can be obtained by measuring the output voltage Vo in a conventional way by any kind of voltage measurement circuit (not shown). Referring to Figure 8, a subtractor 61 subtracts the measured output voltage Vo' from the output voltage reference Vo* so that an output signal of the subtractor 61 represents a difference between the output voltage reference Vo* and the measured output voltage Vo'. This difference is also referred to as output voltage error in the following.

Referring to Figure 8A, a filter 62 receives the subtractor output signal 61 and provides a filter output signal based on the voltage error signal received from the subtractor 61. According to one example, the filter 62 has one of a proportional (P) characteristic, a proportional-integrative (PI) characteristic, a proportional-integrative-derivate (PID) characteristic, or the like. The filter output signal and the measured output voltage Vo' are received by a multiplier 63 which multiplies the filter output signal and the measured output voltage Vo' and provides a multiplier output signal Po*. This multiplier output signal Po* represents an average input power (over one period of the input voltage Vin) of the boost converter that is required to regulate the output voltage Vo such that a voltage level of the output voltage Vo essentially equals a voltage level represented by the output voltage reference Vo*.

Referring to Figure 8A, a divider 64 receives the multiplier output signal Po* and divides the multiplier output signal Po* by a signal $\frac{1}{2} \cdot Vpk^2$ that represents 0,5 times (1/2 times) the square of the amplitude Vpk of the input voltage Vin. An output signal G* of the divider 64 represents an overall desired conductance of the boost converter. A further multiplier 65 receives the divider output signal G* and a measured rectified voltage Vrec', wherein the measured rectified voltage Vrec' is a signal that represents the rectified voltage Vrec. This measured rectified voltage Vrec' may be obtained by measuring the rectified voltage Vrec using any kind of conventional voltage measurement circuit.

An output signal Iin* of the further multiplier 65 represents an input current reference. That is, this multiplier output signal Iin* represents an instantaneous current level of the input current Iin that is required in order to regulate the output voltage Vo such that the voltage level of the output voltage Vo essentially equals the voltage level represented by the output voltage reference Vo*.

Referring to Figure 8A, a further subtractor 66 receives the input current reference Iin* and a measured input current IIn', wherein the measured input current Iin' is a signal that represents an instantaneous current level of the input current Iin. The input current value Iin' may be obtained by measuring the input current Iin using any kind of current measurement circuit. An output signal of the further subtractor 66 represents a current error, that is, the output signal represents a difference between the input current reference Iin* and the measured input current Iin'. This current error signal is received by a further filter 67, which may have one of a P characteristic, a PI characteristic, a PID characteristic, or the like. An output of the further filter 67 represents the overall duty cycle d.

Optionally, a limiter 68 is connected downstream the further filter 67 and is configured to limit the duty cycle to a range of between 0 and 1. When a power consumption of the at least one load rapidly chances, the instantaneous input current Iin may significantly deviate from the input current reference Iin*. This may have the effect that the output signal of the further filter falls below 0 or rises above 1 for a short time period, and, therefore, is outside an acceptable duty cycle range that can be processed by the inner control loop. The limiter helps to prevent the duty cycle signal from leaving the acceptable range.

Figure 8B shows a modification of the outer control loop shown in Figure 8A. The outer control loop shown in Figure 8B is based on the outer control loop shown in Figure 8A and additionally includes an adder 69 that receives the output signal of the further filter 67 and a signal that represents 1-Vrec'/Vo', wherein Vrec'/Vo' is a ratio between the measured rectified voltage Vrec' and the measured output voltage Vo'. An output signal of the adder 69 represents the overall duty cycle d which may be limited by limiter 68. In the control loops shown in Figures 8A and 8B, the duty cycle is essentially given by 1-Vrec/Vo, so that the value 1-Vrec'/Vo' received by the further adder 69 can be considered as a feedforward parameter which helps to improve the characteristic of the control loop.

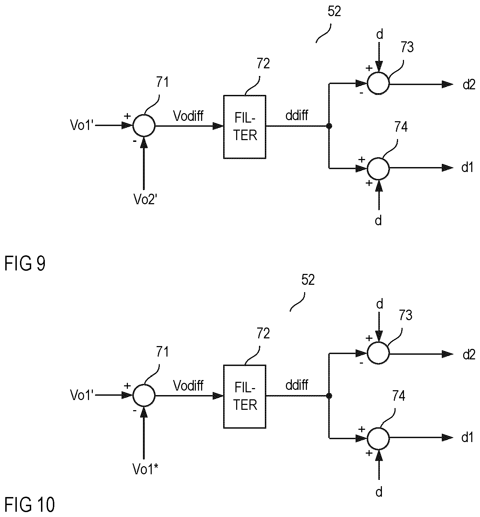

Figure 9 illustrates one example of the inner control loop 52. The inner control loop illustrated in Figure 9 is configured to generate the first and second duty cycle signals d1, d2 such that the first output voltage Vo1 and the second output voltage Vo2 are essentially balanced, so that Vo1≈Vo2. For this, a subtractor 71 receives a first measured output voltage Vo1' and a second measured output voltage Vo2' and generates an output voltage difference Vodiff based on this measured input voltages Vo1, Vo2. This output voltage difference Vodiff represents a difference between the first output voltage Vo1 and the second output voltage Vo2. The first measured output voltage Vo1' represents the first output voltage Vo1, and the second measured output voltage Vo2' represents the second output voltage Vo2. Each of these measured output voltages Vo1', Vo2' may be obtained using any kind of conventional voltage measurement circuit. A filter 72 receives the output voltage difference signal Vodiff and provides a duty cycle difference signal ddiff. The filter 72 may have one of a P characteristic, a PI characteristic, a PID characteristic, or the like. The duty cycle difference signal ddiff represents a difference in the duty cycles of the PWM operation of the first switch 21 and the second switch 22. This duty cycle difference signal ddiff is added to the overall duty cycle signal d in order to obtain one of the first and second duty cycle signals d1, d2 and is subtracted from the overall duty cycle signal d in order to obtain the other one of the first and second duty cycle signals d1, d2.

In the example shown in Figure 9, the duty cycle difference signal ddiff is positive when the first output voltage Vo1 is greater than the second output voltage Vo2 and the duty cycle difference signal ddiff is subtracted from the overall duty cycle signal d by a subtractor 73 in order to obtain the first duty cycle signal d1. Furthermore, the duty cycle difference signal ddiff is added to the overall duty cycle signal d by an adder 74 in order to obtain the second duty cycle signal d2.

In the inner control loop 52 illustrated in Figure 9 , the second duty cycle d2 is smaller than the first duty cycle d1 when the first output voltage Vo1 is greater than the second output voltage Vo2, so that in one drive cycle of the first and second electronic switches 12, 22, the second electronic switch 22 is switched on shorter than the first electronic switch 12. Equivalently, when the second output voltage Vo2 is greater than the first output voltage Vo1, the duty cycle difference signal ddiff is negative, so that the second duty cycle d2 is greater than the first duty cycle d1, so that in one drive cycle, the second electronic switch 22 is switched on longer than the first electronic switch 12.

Figure 10 shows another example of the inner control loop 52. In this example, the inner control loop 52 is configured to generate the first and second duty cycles d1, d2 such that a voltage level of the first output voltage Vo1 essentially equals a voltage level as represented by a first output voltage reference Vo1*. In this example, the first output voltage Vo1 may be generated such that its voltage level is different from a voltage level of the second output voltage Vo2, wherein the voltage level of the first output voltage Vo1 may be greater than or smaller than the voltage level of the second output voltage Vo2. In each case, the voltage level of the second output voltage Vo2 is automatically given by the difference between the voltage level of the overall output voltage Vo, which is regulated by the outer control loop 51, and the voltage level of the first output voltage Vo1, which is regulated by the inner control loop 52.

The inner control loop 52 shown in Figure 10 is based on the inner control loop 52 shown in Figure 9 and is different from the inner control loop shown in Figure 9 in that the subtractor 71 receives the first output voltage reference Vo1* instead of the measured second output voltage Vo2'. By the inner control loop 52 shown in Figure 10, the first and second duty cycles d1, d2 are generated such that in each drive cycle, the first electronic switch 12 is switched on longer than the second electronic switch 22 when the first output voltage Vo1 is greater than the first output voltage reference Vo1*. Equivalently, in each drive cycle of the first and second switches 12, 22 the second switch 22 is switched on longer than the first switch 12 when the first output voltage Vo1 is smaller than the first output voltage reference Vo1*.

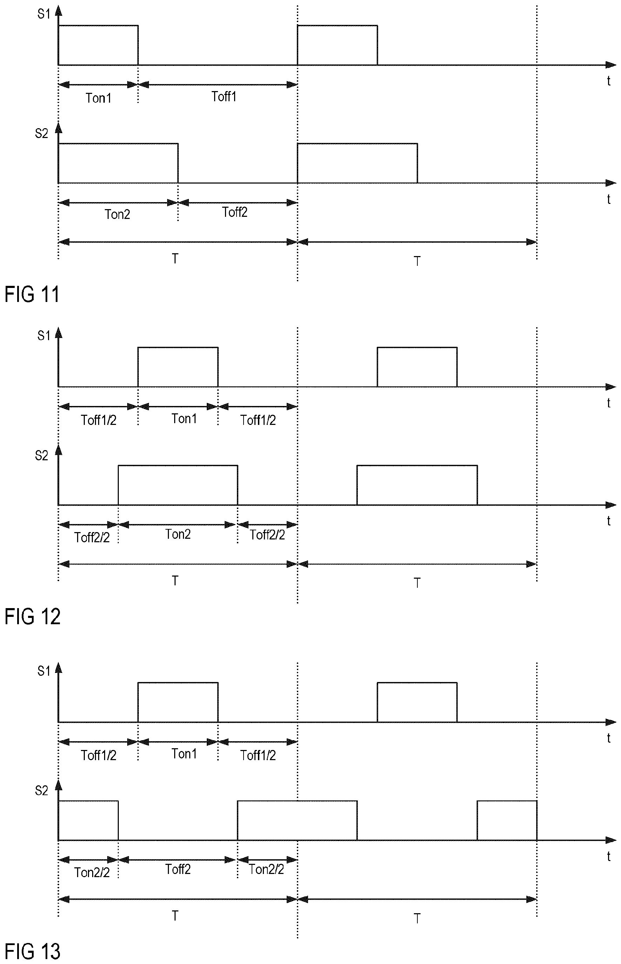

Referring to the above, the first duty cycle d1 defines a duty cycle in a PWM operation of the first electronic switch 12, and the second duty cycle d2 defines a duty cycle in a PWM operation of the second electronic switch 22. Various ways of PWM operating the first and second switches 21, 22 are illustrated in Figures 11 to 13. Each of Figures 11 to 13 shows signal diagrams of the first and second drive signal S1, S2 in two successive drive cycles of the first and second electronic switch 12, 22. Each of the first and second drive signals S1, S2 can have an on-level that switches on the respective switch 12, 22 and an off-level that switches off the respective switch 12, 22. Just for the purpose of illustration, in the examples illustrated in Figures 11 to 13, the on-level is a high signal level and the off-level is a low signal level.

According to one example, the first and second switches 12, 22 are operated at a fixed frequency, so that each drive cycle has a predefined period T, which is a reciprocal of the switching frequency fsw, T=1/fsw. According to one example, the switching frequency fsw is significantly higher than the frequency fvin of the alternating input voltage Vin, so that the input voltage Vin is essentially constant over one period T of each drive cycle. According to one example, the switching frequency fsw is higher than 10 kHz or higher than 100 kHz. According to one example, the switching frequency is selected from between 100 kHz and 200 kHz.

According to one example, the first duty cycle d1 defines an on-time Ton1 of the first switch 12 and the second duty cycle d2 defines an on-time of the second switch 22 in each drive cycle. The on-time is the time period in which the respective electronic switch 12, 22 is switched on during one drive cycle, wherein

$$Ton1 = d1 \cdot T \tag{3a}$$

$$Ton2 = d2 \cdot T \tag{3b}.$$

Off-times Toff1, Toff2 are time periods, for which the respective switch 12, 22 is switched off, wherein these off-times Toff1, Toff2 are given by the time period T of one drive cycle minus the respective on-time,

$$Toff1 = T - Ton1 \tag{3a}$$

$$Toff2 = T - Ton2 \tag{3b}.$$

Referring to the above, the duration of the on-times Ton1, Ton2 is dependent on the first and second duty cycles d1, d2. The position of the on-times Ton1, Ton2 relative to each other and relative to the overall time period T of one drive cycle is arbitrary. Moreover, it is also possible to subdivide the on-times Ton1, Ton2 into two more on-times that are timely spaced apart from each other, wherein an overall duration of the individual sub-on-times equals the respective on-times Ton1, Ton2. Three different examples for timely positioning the on-times Ton1, Ton2 within the drive cycles are illustrated in Figures 11 to 13.

According to one example, illustrated in Figure 11, each of the first on-time Ton1 and the second on-time Ton2 starts at the beginning of the respective drive cycle d. According to another example illustrated in Figure 12, the on-times Ton1, Ton2 are "centered" relative to the drive cycle such that a middle of the first on-time Ton1 is in the middle of the drive cycle and a middle of the second on-time Ton2 is in the middle of the drive cycle.

In the examples illustrated in Figures 11 and 12 the on-times overlap. This, however, is only an example. According to another example illustrated in Figure 13, the first and second switch 12, 22 are operated in an interleaved fashion such that the on-times Ton1, Ton2 do not overlap. Referring to Figure 13, this may be obtained by timely positioning the on-times and off-times of the first and second switch 12, 22 within each drive cycle such that, for example, the middle of the on-time Ton1 of the first drive signal S1 is in the middle of a respective drive cycle and the middle of the off-time Toff2 of the second drive signal S2 is in the middle of the respective drive cycle.

In a conventional boost converter without capacitive circuit 4 voltage jumps of the mid-point voltage Vz may occur in operating scenarios in which the boost converter is operated in such a way that there are time periods within a drive cycle in which the first electronic switch 12 and the second electronic switch 22 have different operating states. This may occur generally when the electronic switches are operated in an interleaved fashion as illustrated in Figure 13, or may occur when the electronic switches 12, 22 are operated as illustrated in Figures 11 and 12 and have on-times Ton1, Ton2 with different durations.

When operating a conventional stacked boost converter in the way illustrated in Figures 11 and 12, for example, the mid-point voltage essentially equals - Vin/2 when the switches 12, 22 have the same operating state and the mid-point voltage jumps to about Vo1/2 - Vin/2 in those time periods in which the second switch 22 is on and the first switch 12 is off. This applies to a scenario in which the second switch 22 is switched on longer than the first switch. In another scenario, in which the first switch 12 is switched on longer than the second switch, the mid-point voltage jumps between about -Vin/2 and about -Vo2/2 - Vin/2.

It can be shown that in an operating scenario as illustrated in Figure 13, the mid-point voltage, in a boost converter without capacitive circuit 4, jumps (a) between about -Vo1/2 - Vin/2 (when the first switch 12 is on and the second switch 22 is off, (b) about -Vin/2 when both switches 12, 22 are off, and (c) about Vo1/2 - Vin/2 when the second switch 22 is on and the first switch 12 is off. Using the capacitive circuit 4 helps to prevent such rapid changes (jumps) of the mid-point voltage Vz and, therefore, helps to reduce common mode noise of the output voltages Vo, Vo1, Vo2.

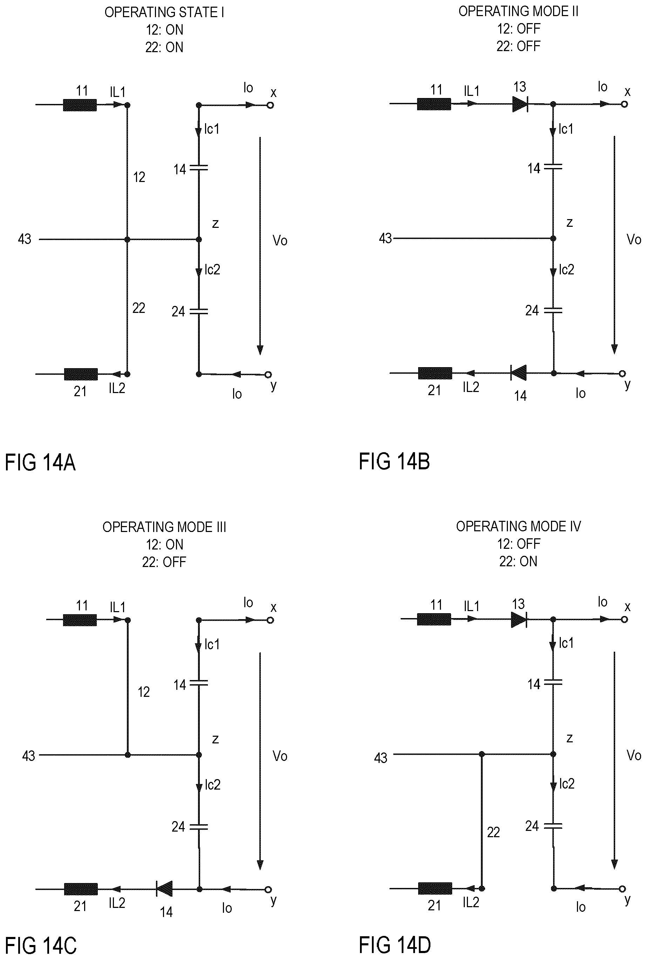

Referring to the above, the boost converter, within one drive cycle, can have four different operating states, wherein the operating states are defined by the operating states of the first and second switch 12, 22. The four different operating states I-IV of the boost converter are schematically illustrated in Figures 14A to 14D. Each of these figures shows the two converter stages and illustrates current paths within the converter stages via which a current may flow.

Figure 14A illustrates the boost converter in a first operating state in which the first and second switches 12, 22 are switched on (wherein the switches are illustrated by solid lines in this example). In this operating state, the output current Io is provided by the output capacitors 14, 24. That is, the output capacitors 14, 24 are discharged in this operating state. The output current Io, in this operating state I, is given by Io = -Ic1 = -Ic2, wherein Ic1 denotes a first capacitor current into the first output capacitor 14 and Ic2 denotes a second capacitor current into the second output capacitor 24.

Figure 14B illustrates a second operating state II. In this operating state both switches 12, 22 are switched off.

In this operating state, inductor currents IL1, IL2 flow via the rectifier elements 13, 14, the output x, y, and the output capacitors 14, 24. The first capacitor Ic1 is given by Ic1 = IL1 - Io and the second capacitor current Ic2 is given by Ic2 = IL2 - Io in this example. That is, the first output capacitor 14 is charged when the first inductor current IL1 is higher than the output current Io and discharged when the first inductor current IL1 is lower than the output current Io. Equivalently, the second output capacitor 24 is charged when the second inductor current IL2 is higher than the output current Io and discharged when the second inductor current IL2 is lower than the output current Io.

In a third operating state III illustrated in Figure 14C, the first switch 12 is switched on and the second switch 22 is switched off. In this operating state III, the first output capacitor 14 is discharged by the output current, so that Ic1 = -Io and the second output capacitor 24, dependent on a relationship between the second inductor current IL2 and the output current Io, is either charged or discharged, wherein Ic2 = IL2 - Io.

In a fourth operating state IV illustrated in Figure 14D, the first switch 12 is switched off and the second switch 22 is switched on. In this operating state IV, the second output capacitor 24 is discharged by the output current, so that Ic2 = -Io and the first output capacitor 14, dependent on a relationship between the first inductor current IL1 and the output current Io, is either charged or discharged, wherein Ic1 = IL1 - Io.

Different first and second duty cycles d1, d2 may have various reasons, such as, different first and second output voltage Vo1, Vo2, different power consumptions of the first and second load Zo1, Zo2, or deviations between inductances of the first and second inductor 11, 21 or between capacitances of the first and second capacitor 41, 42 of the voltage divider. Two different examples for operating the boost converter are explained in the following.

According to one example, the boost converter is operated in such a way that the output voltages Vo1, Vo2 are balanced and loads Zo1, Zo2 with different power consumptions are connected to the first output x, z and the second output z, y. According to one example, a voltage level of the output voltages Vo1, Vo2 is 465V, so that a voltage level of the overall output voltages Vo is 930V, and power consumptions of the loads Zo1, Zo2 are 500W and 450W, respectively.

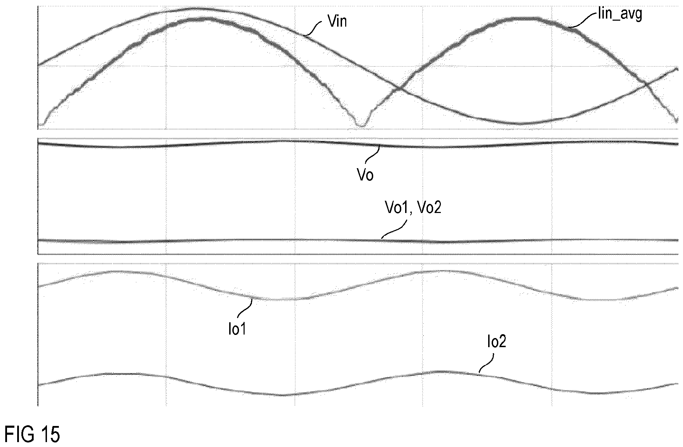

In this case, output currents Io1, Io2 at the first and second output are different. Signal diagrams of the input voltage Vin, an average input current Iin_avg, the first and second output voltages Vo1, Vo2 and the first and second output currents Io1, Io2 are schematically illustrated in Figure 15 over one period of the input voltage Vin. As can be seen from Figure 15, there is a slight ripple in the output voltages Vo1, Vo2, Vo and the output currents Io1, Io2, wherein this ripple is due to the alternating input voltage Vin. A frequency of the ripple is essentials twice the frequency fvin of the input voltage Vin. Such current ripple, however, can be tolerated by various kinds of loads, such as LED strings, so that these types of loads may directly be connected to the output of the boost converter.

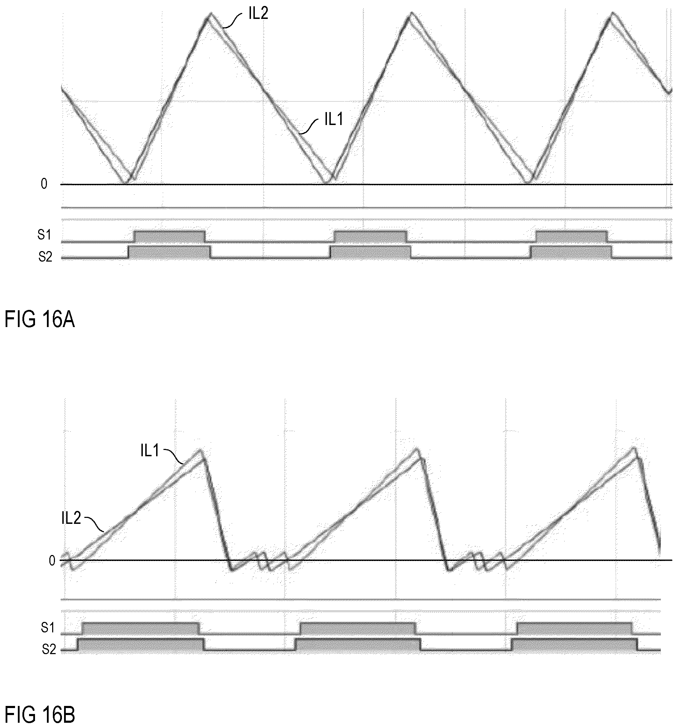

Figures 16A and 16B illustrate the inductor currents IL1, IL2 and the drive signals S1, S2 over several drive cycles in an operating scenario as explained with reference to Figure 15. In the example illustrated in Figure 15, the first and second output voltage Vo1, Vo2 are essentially equal but the first output current Io1 is higher than the second output current Io2, that is, a load Zo1 connected to the first output x, z has a higher power consumption than a load Zo2 connected to the second output z, y. In order to achieve this, the inner control loop generates the second duty cycle d2 such that it is longer than the first duty cycle d1. That is, as illustrated in Figures 16A and 16B, the second switch 22 is switched on longer in each drive cycle than the first switch 12. Just for the purpose of illustration, in the example illustrated in Figure 16A and 16B the first and second drive signals S1, S2 are generated such that a middle of the respective on-time lies in the middle of each drive cycle.

As can be seen from Figures 16A and 16B, the inductor currents IL1, IL2 increase when the respective switch 12, 22 is switched on and decreases when the respective switch 12, 22 is switched off. Figures 16A and 16B show the inductor currents IL1, IL2 and the drive signals S1, S2 for two different instantaneous voltage levels of the input voltage Vin, wherein the signal diagrams shown in Figure 16A represent a scenario with a higher instantaneous voltage level of the input voltage Vin than the signal diagrams shown in Figure 16B. Basically, at a given input power reference Po* (see Figure 8), the duty cycles increase as the instantaneous voltage level of the input voltage Vin decreases in order to achieve a desired input power. Nevertheless, as the instantaneous voltage level of the input voltage Vin becomes very low, the inductor currents IL1, IL2, despite longer on-times, may have rather low peak current levels, so that during the off-times, the inductor currents IL1, IL2 may decrease to zero and parasitic oscillations may occur, as illustrated in Figure 16B.

These parasitic oscillations are due to parasitic resonant circuits, wherein such parasitic resonant circuits include the inductors 11, 21 and parasitic capacitances. Parasitic capacitances include parasitic capacitances of the switches 12, 22. When the capacitive circuit 3 is directly connected to the input a, b, as illustrated in Figure 2, the parasitic capacitances further include parasitic capacitances of the input rectifier 3. The parasitic oscillations are associated with oscillating voltages across the switches 12, 22. Amplitudes of these voltage are lower in a converter of the type illustrated in Figure 1, in which parasitic capacitances of the input rectifier 3 are not part of the parasitic resonant circuits.

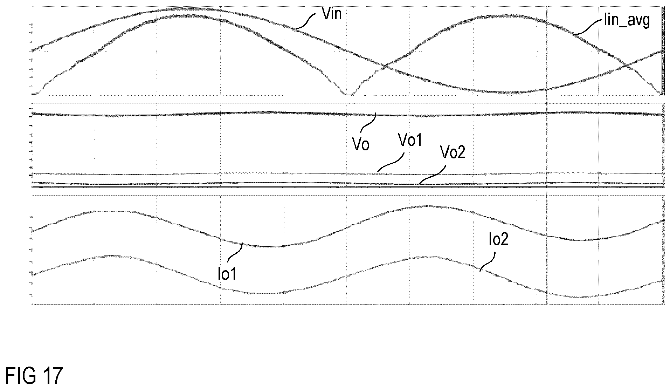

Figure 17 shows signal diagrams of the boost converter when the boost converter is operated in another operating scenario. In this example, the output voltages Vo1, Vo2 are adjusted to be different, wherein the first output voltage Vo1 is higher than the second output voltage Vo2 and a load Zo1 connected to the first output x, z has a higher power consumption than the load Zo2 connected to the second output z, y. According to one example, voltage levels of the output voltages Vo1, Vo2 are 500V and 430V, so that a voltage level of the overall output voltages Vo is 930V, and power consumptions of the loads Zo1, Zo2 are 500W and 450W.

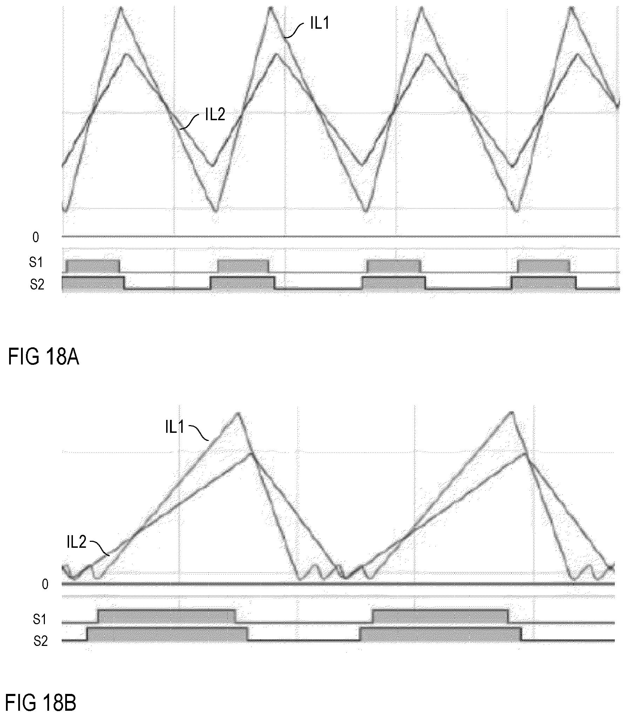

Further, the signal diagrams illustrated in Figure 17 are based on the assumption that there is a mismatch in the inductances of the first and second inductor 11, 21 so that the inductance of the first inductor L1 is 40% lower than the inductance of the second inductor L2. Further, there is a mismatch in the capacitances of the first and second capacitor 41, 42 of the capacitive circuit such that a capacitance of the first capacitor 41 is 20% higher than the capacitance of the second capacitor 42. Figures 18A and 18B show signal diagrams of the inductor current IL1, IL2 and the drive signals s1, s2 for different instantaneous voltage levels of the input voltage Vin, namely a higher voltage level in Figure 18A and a lower voltage level in Figure 18B. As can be seen from Figure 17, 18A and 18B an intended mismatch between the output voltage Vo1, Vo2 and non-intended mismatches between the inductances and the capacitances results in a stable operation of the boost converter and in desired voltage levels of the output voltages Vo1, Vo2, Vo.

In each of the examples explained above, a voltage blocking capability of the devices in the first and second converter stage 1, 2 needs to be adapted to the desired output voltage Vo1, Vo2 of the respective converter stage 1, 2 and can therefore be significantly lower than the overall output voltage Vo.

Furthermore, as can be seen from Figures 16A, 16B, 18A and 18B, the converter stages 1, 2 may operate in DCM (discontinuous current mode), in which the current through the inductors 11, 21 decreases to zero, or in CCM (continuous current mode), in which the current through the inductors 11, 21 does not decrease to zero. The operating mode of one of the converter stages 1, 2 is independent of the operating mode of the other one of the converter stages 1, 2. That is, as illustrated in Figure 18B, there may be operating scenarios in which one of the converter stages 1, 2 is in DCM and the other one of the converter stages 1, 2 is in CCM.

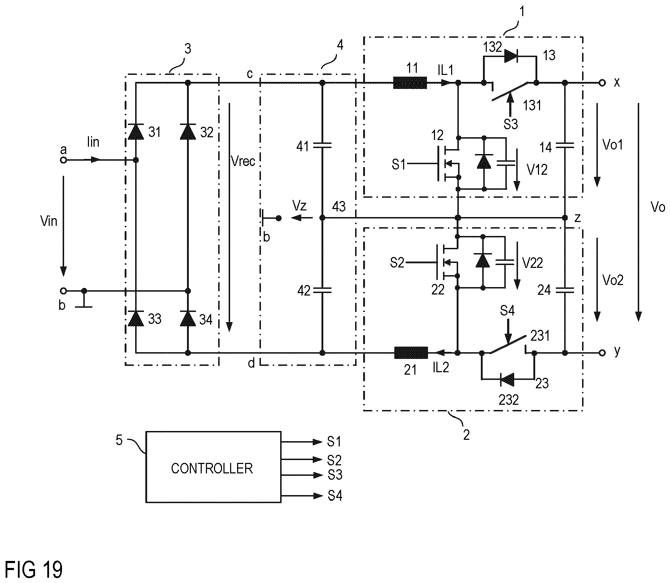

According to another example, both converter stages 1, 2 are operated in TCM (Triangular Current Mode), which is a current mode in which the inductor currents IL1, IL2 have a triangular signal waveform. Operating the two converter stages 1, 2 in TCM makes it possible to decrease voltages V12, V22 across the switches 12, 22 to zero before switching on the switches 12, 22. This, is usually referred to as ZVS (Zero Voltage Switching). ZVS may help to reduce switching losses, in particular in those cases in which the switches 12, 22 are switches with a relatively high output capacitance such as, for example, superjunction transistor devices. One example of a power converter that is configured to operate in TCM and achieve ZVS of the switches 12, 22 is illustrated in Figure 19.

The power converter shown in Figure 19 is based on the power converter shown in Figure 1 and includes active rectifier elements 13, 23 instead of the passive rectifier elements shown in Figure 1. Each of the active rectifier elements 13, 23 may include an electronic switch 131, 231 and a passive rectifier element 132, 232 connected in parallel with the electronic switch 131, 231, wherein the passive rectifier element 131, 231 has the same polarity as the respective passive rectifier element shown in Figure 1. According to one example (not shown), the active rectifier elements 13, 23 are implemented as MOSFETs, wherein a body diode forms the passive rectifier element. Using a MOSFET as an active rectifier element in electronic circuits is commonly known so that no further explanation is required in this regard.

Referring to Figure 19, the controller 5, in addition to the switches 12, 22 controls operation of the active rectifier elements 13, 23, which are briefly referred to as active rectifiers in the following, More specifically, the controller 5 generates a third drive signal S3 and a fourth drive signal S4, wherein the third drive signal S3 is received by the first active rectifier 13 and switches on or off the first active rectifier 13, and the fourth drive signal 43 is received by the second active rectifier 23 and switches on or off the second active rectifier 23. "To switch on or off an active rectifier" includes to switch on or off the electronic switch 131, 231 of the respective active rectifier 13, 23.

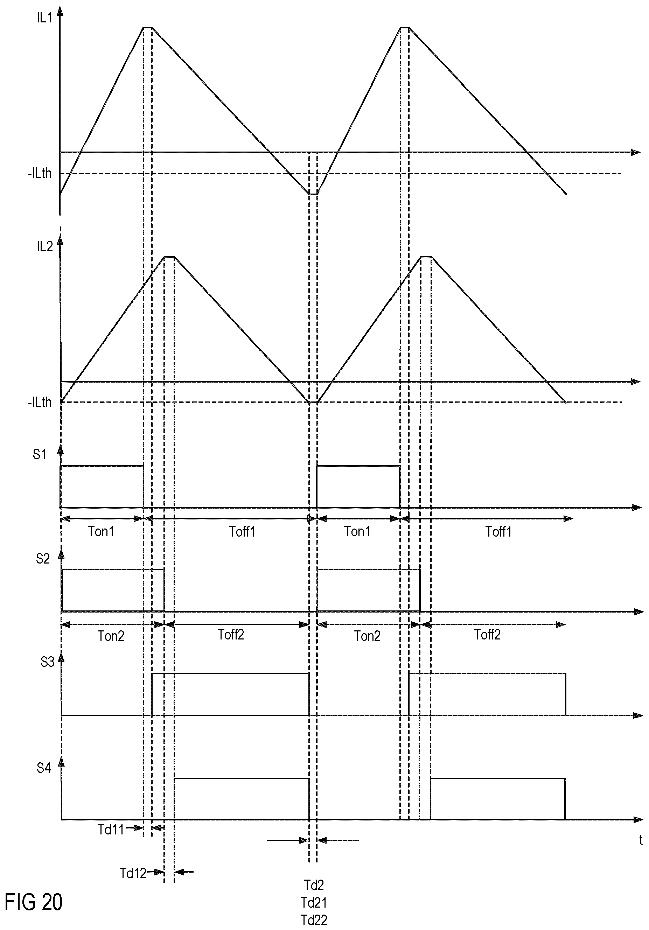

Figure 20 shows signal diagrams that illustrate operating each of the first and second converter stage 1, 2 in TCM, wherein Figure 20 shows signal waveforms of the drive signals S1 - S4 received by the switches 12, 22 and the active rectifiers 13, 23 and of the inductor currents IL1, IL2 in two successive drive cycles. In each of these drive cycles the first switch 12 is in an on-state (switched on state) for a first on-time Ton1 and in an off-state (switched off state) for a first off-time Toff2, and the second switch 22 is in an on-state for a second on-time Ton2 and in an off-state for a second off-time Toff2. Just for the purpose of illustration, in Figure 20, logic high levels represent on-levels and logic low levels represent off-levels of the drive signals S1 - S4. Each of the first and second inductor currents IL1, IL2 essentially increases during the on-state of the respective switch 12, 22 and decreases during the off-state of the respective switch 12, 22.

The active rectifiers 13, 23 are operated complementary to the switches 12, 22 such that in each of the first and second converter stages 1, 2 the switch 12, 22 and the active rectifier 13, 23 are not switched on at the same time. Referring to Figure 20 the active rectifier 13, 23 in each of the first and second converter stages 1, 2 may be operated such that it switches on when the respective switch 12, 22 switches off, wherein there may be a dead time between switching off the switch 12, 22 and switching on the active rectifier 13, 23. During this dead time, the respective inductor current IL1, IL2 flows through the passive rectifier element of the respective active rectifier 13, 23.

More specifically, referring to Figure 20, there may be a first dead time Td11 between switching off the first switch 12 and switching on the active rectifier 21 in the first converter stage 1, and there may be a second dead time Td12 between switching off the second switch 22 and switching on the active rectifier 23 in the second converter stage 1. During these dead times Td11, Td12, the respective converter stage 1, 2 is in a resonant condition. Thus, the respective inductor current IL1, IL2 may increase, decrease, oscillate, or remain essentially constant. Just for the purpose illustration, the inductor currents IL1, IL2 are drawn to be constant in the example illustrated in Figure 20.

Referring to Figure 20, in TCM, the off-time Toff1, Toff2 of each of the switches 12, 22 may be long enough for the respective inductor current IL1, IL2 to change its direction. The respective inductor current IL1, IL2 then flows in a direction opposite the direction illustrated in Figure 20 and is supplied by the respective output capacitor 14, 24. This type of inductor current IL1, IL2 is referred to as negative inductor current in the following. Further, in each of the first and second converter stages there may be a dead time Td21, Td22 between switching off the active rectifier 13, 23 and again switching on the switch 12, 22. This dead time Td21, Td22 may be fixed and may be the same Td2=Td21=Td22 in both converter stages. During this dead time Td21, Td22 the negative inductor current IL1, IL2 continues to flow and discharges an output capacitance of the respective switch 12, 22 in order to achieve ZVS. Just for the purpose of illustration, the switches 12, 22 are implemented as MOSFETs in the example shown in Figure 19, wherein output capacitances of these switches 12, 22 are represented by capacitors in Figure 19. A freewheeling element may be connected in parallel with the switches 12, 22 or may be integrated in the switches, wherein the freewheeling element takes over the negative inductor current before the respective switch 12, 22 switches on. In a MOSFET, for example, the freewheeling element may be formed by the integrated body diode. During this dead time Td21, Td22, the converter stage 1, 2 are in a resonant condition. Thus, the respective inductor current IL1, IL2 may increase, decrease, oscillate, or remain essentially constant. Just for the purpose illustration, the inductor currents IL1, IL2 are drawn to be constant in the example illustrated in Figure 20.

Referring to Figure 19, each of the first and second converter stages 12, 22 has a return path that is separate from the return path of the other one of the converter stages 12, 22. The return path is the current path in which the negative inductor current IL1, IL2 flows. In the first converter stage 1, the return path includes the first output capacitor 14, the first active rectifier 13, the first inductor 11, and the first capacitor 41 of the capacitor circuit 4, and, in the second converter stage 2, the return path includes the second output capacitor 24, the second active rectifier 23, the second inductor 21, and the second capacitor 42 of the capacitor circuit 4. The current flowing into the capacitive circuit 4 may result in a slight change of the voltage across the capacitive circuit 4. This, however, does not have a negative impact on the function of the power converter.

In TCM, different from DCM or CCM explained above, durations of the drive cycles may vary dependent on a power consumption of the at least one load and, moreover, the input voltage Vin. Thus, different from DCM or CCM a switching frequency of the switches 12, 22 may vary.

According to one example, as illustrated in Figure 20, the controller 5 synchronizes operation of the first and second converter stage 1, 2 such that the first and second switch 12, 22 switch on at the same time, wherein durations of the first and second on-times Ton1, Ton2 may vary in order to regulate the first and second output voltages Vo1, Vo2 independently. According to one example, both active rectifiers 13, 23 are switched off as soon as the negative inductor current IL1, 112 in both converter stages 1, 2 is below a predefined negative threshold -ILth. In each of the converter stages 1, 2 the negative inductor current IL1, IL2 magnetizes the inductor 11, 21. The energy associated with magnetizing the inductor 11, 21 is used, after switching off the active rectifier 13, 23 to discharge the output capacitance of the switch 12, 22. The negative threshold -ILth defines the minimum energy that is stored in the inductor 12, 22 by the negative inductor current IL1, Il2. According to one example, the negative threshold -ILth is selected such that the magnetic energy associated with this threshold -ILth is sufficient to discharge the respective output capacitance.

After switching off the active rectifier elements 13, 23, the output capacitances of the switches 12, 22 are discharged during the dead times Td1, Td2, wherein these dead times may be synchronized, with regard to their beginning and their duration, so that there is the same dead time Td=Td1=Td2 in each of the converter stages 1, 2. A new drive cycle starts, and both switches 12, 22 are switched on after the dead time Td.

Referring to the above, both active rectifiers 13, 23 are switched off as soon as the negative inductor current IL1, Il2 in both converter stages 1, 2 is below the predefined negative threshold -ILth. This may have the effect that the inductor currents IL1, IL2 may reach different negative current levels. Just for the purpose of illustration, in the example shown in Figure 20, the first inductor current IL1 has reached the negative threshold -ILth before the second inductor current IL2 so that at the time of switching off the active rectifiers 13, 23 the first inductor current IL1 is more negative than the second inductor current IL2.

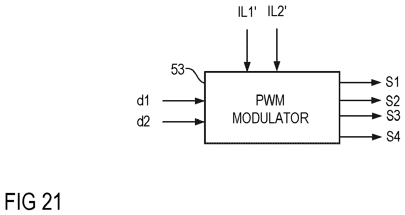

The controller 5 according to Figure 19 may be implemented very similar to the controller according to Figures 7, 8A, 8B, and 9, wherein in the controller according to Figure 19, the signals d1, d2 output by the inner control loop represent the on-times Ton1, Ton2 of the switches 12, 22 (instead of the duty cycle of their operation). Furthermore, the PWM modulator 53 may be implemented as illustrated in Figure 21.

Implementing the controller 5 such that it operates the two converter stages 1, 2 in accordance with the method explained with reference to Figure 20 is only an example. According to another example, the controller 5 operates the two converter stages in an interleaved fashion. Methods for operating converter stages in TCM and in an interleaved fashion are disclosed, for example, in C. Marxgut, F. Krismer, D. Bortis, J. W. Kolar: "Ultraflat Interleaved Triangular Current Mode (TCM) Single-Phase PFC Rectifier", IEEE Transactions on Power Electronics, Vol. 29, No. 2, pp. 873-882, February 2014.

This PWM modulator is configured to control operation of the switches 12, 22 and the active rectifiers 13, 23 dependent on the signals d1, d2 representing the first and second on-times and dependent on measured inductor currents IL1', IL2'. These measured inductor currents IL1', IL2' are used by the PWM modulator to synchronize operation of the two converter stages 1, 2 such that (a) both active rectifiers 13, 23 are switched off when, as indicated by the measured inductor currents IL1', IL2', both inductor currents IL1, IL2 are below the negative threshold -ILth, and (b) a new drive cycle starts after the dead time Td. At the begin of the drive cycle, the PWM modulator switches on the first switch 12 for a first on-time having a duration Ton1 defined by d1 and the second switch 22 for a second on-time having a duration Ton2 defined by d2. Further, after each on-time Ton1, Ton2 the PWM modulator 53 switches on the respective active rectifier 13, 23.

According to one example, each of the converter stages 1, 2 is only operated in TCM. That is, each of these converter stages 1, 2 is in TCM independent of a power consumption of the at least one load and a phase of the input voltage Vin.

Although the present disclosure is not so limited, the following numbered examples demonstrate one or more aspects of the disclosure.

Example 1 - A power converter, comprising: an input configured to receive an input voltage; a first converter stage coupled between the input and a first output; a second converter stage coupled between the input and a second output; and a capacitive circuit, wherein the first output comprises a first output node and a mid-point and the second output comprises the mid-point and a second output node, and wherein the capacitive circuit is coupled to the input and comprises a tap connected to the mid-point.

Example 2 - The power converter of example 1, further comprising: an input rectifier connected between the input and intermediate nodes , wherein the capacitive circuit is connected between the intermediate nodes.

Example 3 - The power converter of example 1 wherein the capacitive circuit is connected between input nodes of the input.

Example 4 - The power converter of example 2, wherein the first converter stage is connected between a first one of the intermediate nodes and the first output, and wherein the second converter stage is connected between a second one of the intermediate nodes and the first output.

Example 5 - The power converter of any one of the preceding examples, wherein the capacitive circuit comprises a first capacitor and a second capacitor connected in series, wherein the tap is a circuit node common to the first capacitor and the second capacitor.

Example 6 - The power converter of example 5, wherein a respective capacitance of each of the first and second capacitors is between 100 nanofarads and 1 microfarad.

Example 7 - The power converter of any one of the preceding examples, further comprising: a controller configured to control operation of the power converter such that each of a first voltage provided at the first output and a second voltage provided at the second output has a predefined voltage level.

Example 8 - The power converter of example 7, wherein the controller is configured to control operation of the power converter such that the first voltage and the second voltage are essentially equal.

Example 9 - The power converter of example 7, wherein the controller is configured to control operation of the power converter such that the first voltage and the second voltage are different.

Example 10 - The power converter of any one of examples 7 to 9, wherein the controller is configured to control operation of the power converter such that each of the first converter stage and the second converter stage operates in TCM.

Example 11 - A system comprising: a power converter according to any one of the preceding examples; and at least one load connected to the power converter.

Example 12 - The system of example 11, wherein the at least one load is devoid of a further power converter.

Example 13 - The system of example 11 or 12, wherein the at least one load comprises at least one LED string.

Example 14 - A method, comprising: receiving an input voltage at an input of a power converter and providing an output voltage between a first output node and a second output node of the power converter, wherein the power converter comprises: a first converter stage coupled between the input and a first output comprising a first output node and a mid-point; a second converter stage coupled between the input and a second output comprising the mid-point and the second output node; and a capacitive circuit coupled to the input and comprising a tap connected to the mid-point.

Example 15 - The method of example 14, wherein providing the output voltage between the first output node and the second output node comprises: providing a first regulated output voltage between the first output node and the mid-point; and providing a second regulated output voltage between the mid-point and the second output node.

**Claims**

1. A power converter, comprising:

   an input (a, b) configured to receive an input voltage (Vin);
   a first converter stage (1) coupled between the input (a, b) and a first output (x, z);
   a second converter stage (2) coupled between the input (a, b) and a second output (y, z); and
   a capacitive circuit (4),
   wherein the first output (x, z) comprises a first output node (x) and a mid-point (z) and the second output (z, y) comprises the mid-point (z) and a second output node (y), and
   wherein the capacitive circuit (4) is coupled to the input (a, b) and comprises a tap (43) connected to the mid-point.

2. The power converter of claim 1, further comprising:

   an input rectifier (3) connected between the input (a, b) and intermediate nodes (c, d),
   wherein the capacitive circuit (3) is connected between the intermediate nodes (c, d).

3. The power converter of claim 1
   wherein the capacitive circuit (3) is connected between input nodes of the input (a, b).

4. The power converter of claim 2,
   wherein the first converter stage (1) is connected between a first one of the intermediate nodes (c, d) and the first output (x, z), and
   wherein the second converter stage (2) is connected between a second one of the intermediate nodes (c, d) and the first output (x, z).

5. The power converter of any one of the preceding claims,
   wherein the capacitive circuit (4) comprises a first capacitor (41) and a second capacitor (42) connected in series,
   wherein the tap (43) is a circuit node common to the first capacitor (41) and the second capacitor (42).

6. The power converter of claim 5, wherein a respective capacitance of each of the first and second capacitors (41, 42) is between 100 nanofarads and 1 microfarad.

7. The power converter of any one of the preceding claims, further comprising:
   a controller (5) configured to control operation of the power converter such that each of a first voltage (Vo1) provided at the first output (x, z) and a second voltage (Vo2) provided at the second output (z, y) has a predefined voltage level.

8. The power converter of claim 7,
   wherein the controller (5) is configured to control operation of the power converter such that the first voltage (Vo1) and the second voltage (Vo2) are essentially equal.

9. The power converter of claim 7,

wherein the controller (5) is configured to control operation of the power converter such that the first voltage (Vo1) and the second voltage (Vo2) are different.

10. The power converter of any one of claims 7 to 9,
wherein the controller (5) is configured to control operation of the power converter such that each of the first converter stage (1) and the second converter stage (2) operates in TCM.

11. A system comprising:

    a power converter according to any one of the preceding claims; and
    at least one load (Zo; Zo1, Zo2) connected to the power converter.

12. The system of claim 11,
wherein the at least one load is devoid of a further power converter.

13. The system of claim 11 or 12, wherein the at least one load (Zo; Zo1, Zo2) comprises at least one LED string (8; 8A-8N).

14. A method, comprising:
receiving an input voltage (Vin) at an input of a power converter and providing an output voltage (Vout) between a first output node (x) and a second output node (y) of the power converter, wherein the power converter comprises:

    a first converter stage (1) coupled between the input (a, b) and a first output (x, z) comprising a first output node (x) and a mid-point (z);
    a second converter stage (2) coupled between the input (a, b) and a second output (y, z) comprising the mid-point (z) and the second output node (y); and
    a capacitive circuit (4) coupled to the input (a, b) and comprising a tap (43) connected to the mid-point (z).

15. The method of claim 14,
wherein providing the output voltage (Vout) between the first output node (x) and the second output node (y) comprises:

    providing a first regulated output voltage (Vout1) between the first output node (x) and the mid-point (z); and
    providing a second regulated output voltage (Vout2) between the mid-point (z) and the second output node (y).

FIG 1

FIG 2

FIG 3

FIG 4

FIG 5

FIG 6A

FIG 6B

51    52    53

OUTER
CONTROL
LOOP

d

INNER
CONTROL
LOOP

d1

d2

PWM
MODULATOR

S1

S2

5

FIG 7

51

1/2·Vpk²

62    63    B    65    66    67    68

Vo* →(+/−)→ 61 → FIL-TER → (x) → Po* → A/B → G* → (x) → Iin* →(+/−)→ FIL-TER → LIMITER → d

61    64    Vrec'    Iin'

Vo'

FIG 8A

51

1/2·Vpk²

62    63    B    65    66    67    69    68

Vo* →(+/−)→ 61 → FIL-TER → (x) → Po* → A/B → G* → (x) → Iin* →(+/−)→ FIL-TER →(+/+)→ LIMITER → d

61    64    Vrec'    Iin'    1-Vrec'/Vo'

Vo'

FIG 8B

FIG 9

FIG 10

FIG 11

FIG 12

FIG 13

OPERATING STATE I
12: ON
22: ON

11 IL1     Io   x

Ic1

14

12    14

z

43     Vo

Ic2

22   24

21   IL2     Io   y

## FIG 14A

OPERATING MODE II
12: OFF
22: OFF

11 IL1   13    Io   x

Ic1

14

z

43     Vo

Ic2

24

21   IL2   14    Io   y

## FIG 14B

OPERATING MODE III
12: ON
22: OFF

11 IL1     Io   x

Ic1

12    14

z

43     Vo

Ic2

24

21   IL2   14    Io   y

## FIG 14C

OPERATING MODE IV
12: OFF
22: ON

11   IL1   13    Io   x

Ic1

14

z

43     Vo

Ic2

22   24

21   IL2     Io   y

## FIG 14D

FIG 15

FIG 16A

FIG 16B

FIG 17

FIG 18A

FIG 18B

FIG 19

FIG 20

IL1'  IL2'

53

d1 →

d2 →

PWM
MODULATOR

→ S1
→ S2
→ S3
→ S4

FIG 21

Europäisches Patentamt

European Patent Office

Office européen des brevets

# EUROPEAN SEARCH REPORT

Application Number

EP 20 19 1177

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BARBOSA P ET AL: "Analysis and evaluation of the two-switch three-level boost rectifier", 32ND.ANNUAL IEEE POWER ELECTRONICS SPECIALISTS CONFERENCE. PESC 2001. CONFERENCE PROCEEDINGS. VANCOUVER, CANADA, JUNE 17 - 21, 2001; [ANNUAL POWER ELECTRONICS SPECIALISTS CONFERENCE], NEW YORK, NY : IEEE, US, vol. 3, 17 June 2001 (2001-06-17), pages 1659-1664, XP010559466, DOI: 10.1109/PESC.2001.954357 ISBN: 978-0-7803-7067-8 * abstract * * figures 1, 3 * ----- | 1-15 | INV. H02M1/38 H02M1/42 H02M3/158 H02M1/00 |
| X | US 2006/238941 A1 (INGEMI MICHAEL [US] ET AL) 26 October 2006 (2006-10-26) * abstract * * paragraphs [0007], [0030]; figures 1, 3A * ----- | 1-15 | |
| X | US 2016/043633 A1 (PHADKE VIJAY GANGADHAR [PH]) 11 February 2016 (2016-02-11) * abstract * * paragraph [0011]; figure 2 * ----- -/-- | 1-15 | TECHNICAL FIELDS SEARCHED (IPC) H02M |

The present search report has been drawn up for all claims

| Place of search | Date of completion of the search | Examiner |
|---|---|---|
| The Hague | 25 November 2020 | Van der Meer, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 20 19 1177

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | MARXGUT CHRISTOPH ET AL: "Ultraflat Interleaved Triangular Current Mode (TCM) Single-Phase PFC Rectifier", IEEE TRANSACTIONS ON POWER ELECTRONICS, INSTITUTE OF ELECTRICAL AND ELECTRONICS ENGINEERS, USA, vol. 29, no. 2, 1 February 2014 (2014-02-01), pages 873-882, XP011524648, ISSN: 0885-8993, DOI: 10.1109/TPEL.2013.2258941 [retrieved on 2013-08-20] * abstract * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 25 November 2020 | Van der Meer, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 3 955 444 A1

## ANNEX TO THE EUROPEAN SEARCH REPORT
## ON EUROPEAN PATENT APPLICATION NO.

EP 20 19 1177

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2020

| Patent document cited in search report | | Publication date | Patent family member(s) | | Publication date |
|---|---|---|---|---|---|
| US 2006238941 | A1 | 26-10-2006 | EP | 1872453 A2 | 02-01-2008 |
| | | | ES | 2425754 T3 | 17-10-2013 |
| | | | US | 2006238941 A1 | 26-10-2006 |
| | | | WO | 2006115959 A2 | 02-11-2006 |
| US 2016043633 | A1 | 11-02-2016 | CN | 105375794 A | 02-03-2016 |
| | | | US | 2016043633 A1 | 11-02-2016 |

EPO FORM P0459

For more details about this annex : see Official Journal of the European Patent Office, No. 12/82

31

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. MARXGUT ; F. KRISMER ; D. BORTIS ; J. W. KOLAR.** Ultraflat Interleaved Triangular Current Mode (TCM) Single-Phase PFC Rectifier. *IEEE Transactions on Power Electronics,* February 2014, vol. 29 (2), 873-882